# EUROPEAN PATENT SPECIFICATION

(11) **EP 3 287 302 B1**
(45) Date of publication and mention of the grant of the patent: **07.10.2020**
(21) Application number: 17186533.0
(22) Date of filing: 17.08.2017
(51) Int. Cl.: B60C 15/04

(54) **PNEUMATIC TIRE**
LUFTREIFEN
PNEUMATIQUE

(30) Priority: 22.08.2016 JP 2016162153
(43) Date of publication of application: 28.02.2018
(73) Proprietor: Sumitomo Rubber Industries, Ltd., Kobe-shi, Hyogo-ken (JP)
(72) Inventor: ISAKA, Wataru, Kobe-shi, Hyogo 651-0072 (JP)
(74) Representative: Manitz Finsterwald Patent- und Rechtsanwaltspartnerschaft mbB

(56) References cited:
- EP-A2- 0 983 876
- DE-A1-102008 004 886
- JP-A- 2008 013 135
- US-A1- 2015 328 938
- US-A1- 2016 082 784

## Description

### BACKGROUND OF THE INVENTION

### Field of the Invention

The present invention relates to pneumatic tires having carcasses and bead cores.

### Description of the Background Art

To date, a pneumatic tire in which a carcass extends from a tread portion through sidewall portions to bead portions, annular bead cores are disposed in the bead portions, and the carcass is turned up along inner circumferential portions of the bead cores, has been known.

For example, a pneumatic tire in which outer ends, in the tire radial direction, of bead cores are disposed tire-radially outward of rim lines is suggested in Japanese Laid-Open Patent Publication No. 2001-97010 (hereinafter, referred to as Patent Literature 1). The rim line is disposed tire-radially outward of the outer end, in the tire radial direction, of a rim flange such that the rim line can be visually confirmed with ease even in a state where the pneumatic tire is mounted on the rim.

However, in the pneumatic tire disclosed in Patent Literature 1, stiffness of the bead cores becomes excessive, flexibility of the bead portions is impaired, and ride comfort may be affected.

US 2015/0328938 A1 discloses a pneumatic tire which comprises a carcass and annular bead cores disposed in bead portions. The carcass extends from a tread portion through sidewall portions to the bead portions and is turned up along inner circumferential portions of the bead cores. Each bead core includes a wire that is wound in a tire circumferential direction. When the tire is mounted on a normal rim and inflated to a normal internal pressure and when no load is applied thereto, an outer end, in a tire radial direction, of the bead core is positioned tire-radially inward of an outer end, in the tire radial direction, of a flange of the normal rim. Furthermore, the wire is arranged in two or more rows in a tire axial direction, and it is wound plural times in the tire radial direction into a stacked state. The number of times the wire is wound in the tire radial direction into the stacked state is greater than or equal to 1.5 times the number of the rows of the wire in the tire axial direction.

DE 10 2008 004 886 A1 discloses a pneumatic tire having features according to a related technology.

EP 0 983 876 A2 also discloses a pneumatic tire having features according to a related technology.

JP 2008 013135 A discloses a pneumatic tire having a bead portion in which a plurality of wires are twisted around a core wire.

US 2016/082784 A1 discloses a pneumatic tire having a carcass and a bead portion in which two wires comprising twisted filaments are wound plural times in the tire radial direction into a stacked state on both sides of the carcass.

### SUMMARY OF THE INVENTION

The present invention is made in view of the aforementioned circumstances, and a main object of the present invention is to provide a pneumatic tire that allows both holding force of bead cores and flexibility of bead portions to be achieved at high levels, and allows improvement of ride comfort while enhancing steering stability.

This object is achieved by a pneumatic tire having the features according to claim 1.

A pneumatic tire according to the present invention is directed to a pneumatic tire that includes: a carcass that extends from a tread portion through sidewall portions to bead portions; and annular bead cores disposed in the bead portions, the carcass being turned up along inner circumferential portions of the bead cores. Each bead core includes a wire that is wound in a tire circumferential direction. In a normal state where the pneumatic tire is mounted on a normal rim, and is inflated to a normal internal pressure, and no load is applied thereto, an outer end, in a tire radial direction, of the bead core is positioned tire-radially inward of an outer end, in the tire radial direction, of a flange of the normal rim. The wire is structured so as to have a plurality of filaments twisted. The wire is arranged in two or more rows in a tire axial direction, and is wound plural times in the tire radial direction into a stacked state. The number of times the wire is wound in the tire radial direction into the stacked state is greater than or equal to 1.5 times the number of the rows of the wire in the tire axial direction.

In the pneumatic tire of the present invention, the wire has a bundle twist structure in which a plurality of the filaments are bundled and twisted.

In the pneumatic tire of the present invention, the wire has an elongation of 0.03% to 0.75% when a tensile force is increased from 2.5 N to 49 N.

In the pneumatic tire of the present invention, the wire preferably has a bending stiffness of 100 N to 260 N.

In the pneumatic tire of the present invention, each filament preferably has a diameter of 0.15 mm to 0.45 mm.

In the pneumatic tire according to the present invention, the wire of the bead core is arranged in two or more rows in the tire axial direction, and is wound plural times in the tire radial direction into a stacked state, and the number of times the wire is wound in the tire radial direction into a stacked state, is greater than or equal to 1.5 times the number of the rows of the wire in the tire axial direction. Therefore, the wire that is wound outward in the tire radial direction into a stacked state such that the number of times the wire is wound is greater than 1.0 time the number of rows of the wire, causes a high tensile force to be generated when the pneumatic tire is inflated to an internal pressure and when a normal load is applied, thereby enhancing holding force of the bead cores.

The outer end, in the tire radial direction, of each bead core in a normal state is positioned tire-radially inward of the outer end, in the tire radial direction, of a flange of a normal rim. Thus, the bead portions are easily bent and deformed along the flange under a normal load, and flexibility becomes appropriate from the sidewall portions to the bead portions. Further, the wire that is structured to have a plurality of filaments twisted exhibits excellent flexibility, to enhance flexibility of the bead portions. By the synergistic effect as described above, both holding force of the bead cores and flexibility of the bead portions are achieved at high levels, and the pneumatic tire allows improvement of ride comfort while enhancing steering stability.

### BRIEF DESCRIPTION OF THE DRAWINGS

FIG. 1 is a cross-sectional view of a pneumatic tire according to one embodiment of the present invention;
FIG. 2 is an enlarged cross-sectional view of a bead portion shown in FIG. 1;
FIG. 3 is an enlarged cross-sectional view of a bead portion that is modification of the bead portion shown in FIG. 2;
FIG. 4 is a cross-sectional view of a wire shown in FIG. 2 or FIG. 3;
FIG. 5 is a cross-sectional view of a wire other than the wire shown in FIG. 4; and
FIG. 6 is a side view illustrating a manner for measuring bending stiffness of the wire.

### DESCRIPTION OF THE PREFERRED EMBODIMENTS

Hereinafter, one embodiment of the present invention will be described with reference to the drawings.

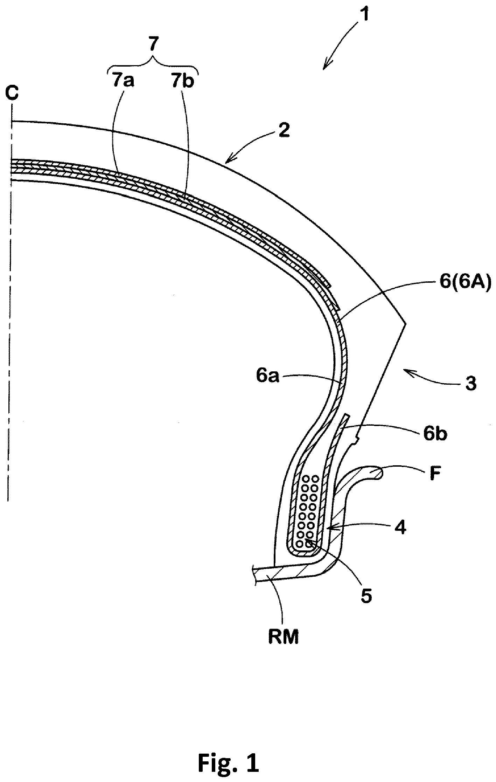

FIG. 1 is a tire meridian cross-sectional view of a pneumatic tire 1 (hereinafter, may be merely referred to as "tire") of the present embodiment, and the tire meridian cross-sectional view illustrates a cross-section that includes a tire rotation axis in a normal state. The normal state represents a state in which a tire is mounted on a normal rim RM and is inflated to a normal internal pressure, and no load is applied to the tire. Hereinafter, unless otherwise specified, dimensions of components of the tire, and the like are represented as values measured in the normal state.

The "normal rim" represents a rim that is defined, in a standard system including a standard with which the tire complies, by the standard for each tire, and includes, for example, the "standard rim" in the JATMA standard, the "Design Rim" in the TRA standard, and the "Measuring Rim" in the ETRTO standard.

The "normal internal pressure" represents an air pressure that is defined, in a standard system including a standard with which the tire complies, by the standard for each tire, and includes the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard. When the tire is for a passenger car, the normal internal pressure is 180 kPa.

As shown in FIG. 1, the pneumatic tire 1 of the present embodiment includes: a carcass 6 that extends from a tread portion 2 through sidewall portions 3 to bead portions 4; annular bead cores 5 disposed in the bead portions 4; and a belt layer 7 that is disposed outward of the carcass 6 in the tire radial direction and inward of the tread portion 2. The pneumatic tire 1 is preferably used for passenger cars as well as two-wheeled automotive vehicles.

Each bead core 5 includes a wire 50 that is wound in the tire circumferential direction. For the wire 50, for example, not only steel such as a steel wire, but also a material such as an aromatic polyamide fiber can be used.

The carcass 6 includes, for example, one carcass ply 6A. The carcass ply 6A includes turned-up portions 6b at both ends of a body portion 6a that extends on and between the paired bead cores 5 and 5, in a continuous manner, and the turned-up portions 6b are turned up along the inner circumferential portions of the bead cores 5 from the inner side toward the outer side in the tire axial direction, and thus held by the bead cores 5. In the carcass ply 6A, for example, an organic fiber cord formed from an aromatic polyamide, rayon, or the like is used as a carcass cord. For example, the carcass cord is arranged at an angle of 70° to 90° relative to the tire equator C.

In the present embodiment, in the belt layer 7, two belt plies 7A, 7B have belt cords arranged so as to be tilted at, for example, an angle of 15° to 45° relative to the tire equator C, and are stacked in the tire radial direction such that the belt cords intersect each other. For the belt cords, for example, steel, aramid, rayon, or the like is preferably used.

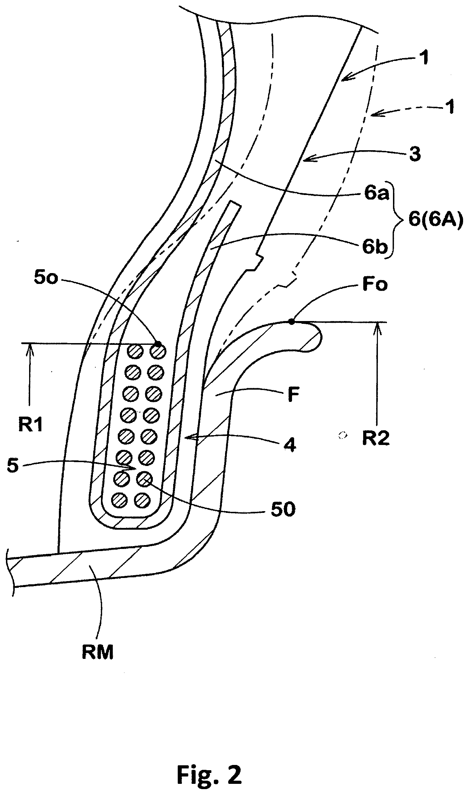

FIG. 2 shows a cross-section of the bead portion 4. The wire 50 is arranged in two or more rows in the tire axial direction, and is wound plural times in the tire radial direction into a stacked state.

The number of times the wire 50 is wound in the tire radial direction into a stacked state is greater than or equal to 1.5 times the number of rows of the wire 50 in the tire axial direction. In the present embodiment, the wire 50 that is arranged in two rows in the tire axial direction is wound eight times in the tire radial direction into a stacked state. The wire 50 that is wound outward in the tire radial direction into a stacked state such that the number of times the wire 50 is wound is greater than 1.0 time the number of rows of the wire 50, causes a high tensile force to be generated when the pneumatic tire 1 is inflated to an internal pressure and when a load is applied, thereby enhancing holding force of the bead cores 5. Thus, holding force of the bead cores 5 is sufficiently enhanced, and steering stability is improved.

In FIG. 2, the outline of the pneumatic tire 1, under a normal load, on the cross-section that include the center of the ground contact surface is represented by an alternate long and two short dashes line.

The "normal load" represents a load that is defined, in a standard system including a standard with which the tire complies, by the standard for each tire, and includes the "maximum load capacity" in the JATMA standard, the "maximum value" recited in the table "TIRE LOAD LIMITS AT VARIOUS COLD INFLATION PRESSURES" in the TRA standard, and the "LOAD CAPACITY" in the ETRTO standard. When the tire is for a passenger car, the normal load is a load that corresponds to 88% of the above-described load.

When a normal load is applied to the pneumatic tire 1, the bead portions 4 are bent and deformed outward in the tire axial direction along a flange F of a normal rim RM, and the sidewall portions 3 are deformed in the tire radial direction. In general, it is known that a tire in which deformation of the sidewall portions 3 is great, exhibits an excellent ride comfort. Therefore, ride comfort performance of the pneumatic tire 1 is affected by bending stiffness from the sidewall portions 3 to the bead portions 4.

In the pneumatic tire 1, an outer end 5o, in the tire radial direction, of the bead core 5 in a normal state is positioned tire-radially inward of an outer end Fo, in the tire radial direction, of the flange F of the normal rim RM. That is, a radius R1 at the outer end 5o of the bead core 5 is less than a radius R2 at the outer end Fo of the flange F. Thus, the bead portions 4 are easily bent and deformed along the flange F, and flexibility becomes appropriate from the sidewall portions 3 to the bead portions 4.

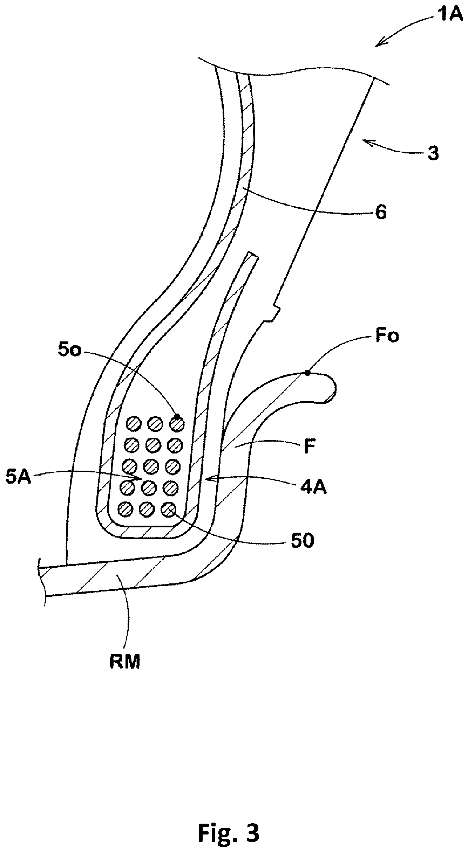

FIG. 3 shows a cross-section of a bead portion 4A that is modification of the bead portion 4. In the bead portion 4A, a bead core 5A in which the wire 50 arranged in three rows in the tire axial direction is wound five times in the tire radial direction into a stacked state, is adopted. The bead core 5A is the same as the bead core 5 in that the number of times the wire 50 is wound in the tire radial direction into a stacked state is greater than or equal to 1.5 times the number of rows of the wire 50 in the tire axial direction. Further, the bead core 5A is the same as the bead core 5 in that the outer end 5o of the bead core 5 is positioned inward of the outer end Fo of the flange F, in the tire radial direction.

The structures of the bead cores 5 and 5A may be a so-called single winding structure in which one wire 50 is wound, and, alternatively, the structures of the bead cores 5 and 5A may be a so-called tape bead structure in which a tape-like member having a plurality of wires 50 aligned with each other is wound.

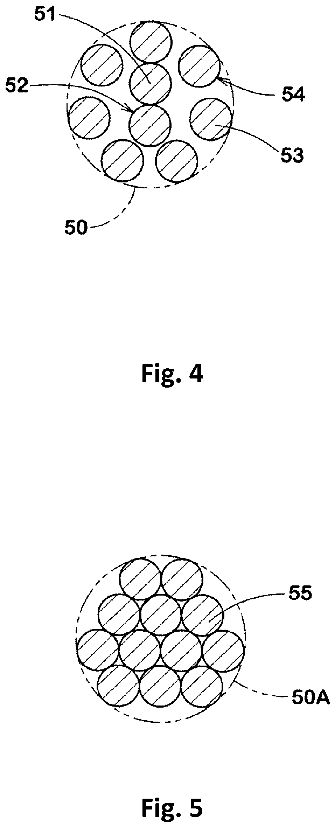

FIG. 4 shows a cross-section of the wire 50 according to one embodiment. The wire 50 has a structure in which a plurality of filaments 51, 53 are twisted. The wire 50 has a layer twist structure that includes a core portion 52 including the filament 51, and an outer layer portion 54 in which the filament 53 disposed around the core portion 52 is twisted. The wire 50 having such a layer twist structure exhibits excellent flexibility to enhance flexibility of the bead portions 4.

By the synergistic effect described above, both holding force of the bead cores 5 and flexibility of the bead portions 4 are achieved at high levels, and the pneumatic tire 1 allows improvement of ride comfort while enhancing steering stability.

FIG. 5 shows a cross-section of a wire 50A having another twist structure. The wire 50A has a bundle twist structure in which a plurality of filaments 55 are bundled and twisted. The wire 50A having such a bundle twist structure is less expensive than the wire 50 shown in FIG. 4, and contributes to reduction of cost of the bead cores 5.

The wire 50 preferably has an elongation of 0.03% to 0.75% when a tensile force is increased from 2.5 N to 49 N. When the elongation is less than 0.03%, the wire 50 has an insufficient flexibility, and ride comfort may be affected. When the elongation is greater than 0.75%, holding force of the bead cores 5 may be reduced, and steering stability may be affected.

The wire 50 preferably has a below-determined bending stiffness of 100 N to 260 N.

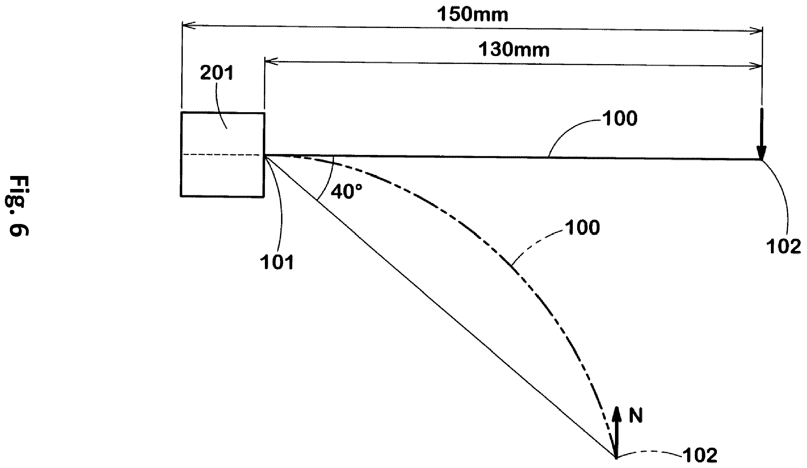

FIG. 6 shows a manner for measuring the bending stiffness of the wire 50. In the present embodiment, the "bending stiffness" of the wire 50 is measured as follows. That is, the wire 50 is fused and cut at a length of 150 mm so as to prevent untwisting in the wire 50, and a test piece 100 is thus obtained, and the bending stiffness is measured by using, for example, a stiffness tester (Model 150-D) manufactured by Taber in the U.S.A. Specifically, as schematically shown in FIG. 6, one end 101 of the test piece 100 is fixed to a tool 201, and force is applied, in the direction perpendicular to the test piece 100, to the other end 102 of the test piece 100 that extends from the fixed end over the length of 130 mm, and, when the opening angle of 40° is formed by the other end 102 of the test piece 100, a drag (bending hardness) N is measured, thereby obtaining bending stiffness.

When the bending stiffness is less than 100 N, holding force of the bead cores 5 is reduced, and steering stability may be affected. When the bending stiffness is greater than 260 N, the wire 50 has an insufficient flexibility, and ride comfort may be affected.

The diameter of each of the filaments 51, 53, and 55 is preferably 0.15 mm to 0.45 mm. When the diameter is less than 0.15 mm, holding force of the bead cores 5 is reduced, and steering stability may be affected. When the diameter is greater than 0.45 mm, the wire 50 has an insufficient flexibility, and ride comfort may be affected.

Although the pneumatic tire of the present invention has been described above in detail, the present invention is not limited to the specific embodiment described above, and various modifications can be made to implement the present invention.

### [Examples]

Samples of pneumatic tires, for a two-wheeled automotive vehicle, having the basic structure shown in FIG. 1 and having the size of 180/55ZR17 were produced according to the specifications indicated in Table 1, and ride comfort and steering stability were tested. In each pneumatic tire having the specifications, a bead core was formed by a steel wire coated with rubber being wound on an annular tool having an almost U-shaped groove. Further, for a carcass, a carcass ply in which nylon cords having 2/1400 dtex were embedded at 51 cords/50 mm, was used, and a green tire was formed. The test method is as follows.

### <Ride comfort>

Each sample tire was mounted on a rim having the size of MT5.50×17. When the tire was moved over a projection having the height of 5 mm and the length of 5 mm under the conditions that an internal pressure was 290 kPa, a load was 1.3 kN, and a speed was 15 km/h, a generated reaction force and time up to convergence were measured. The results are indicated as indexes with the result of comparative example 3 being 100. The greater the value of the index is, the better the result is.

### <Steering stability>

Each test tire was mounted to a rear wheel of a two-wheeled automotive vehicle having an engine displacement of 1300 cc under the above-described conditions. A commercially available tire was mounted to a front wheel. By a rider for the test, the test vehicle was caused to run on a dry asphalt road surface in a test course that is a circuit course, and, at this time, the rider for the test made sensory evaluation of running characteristics associated with responsiveness, stiffness, grip force, and stability and transient characteristics on a rough road surface. The results are indicated as scores with the score of comparative example 3 being 100. The greater the value of the score is, the better the result is.

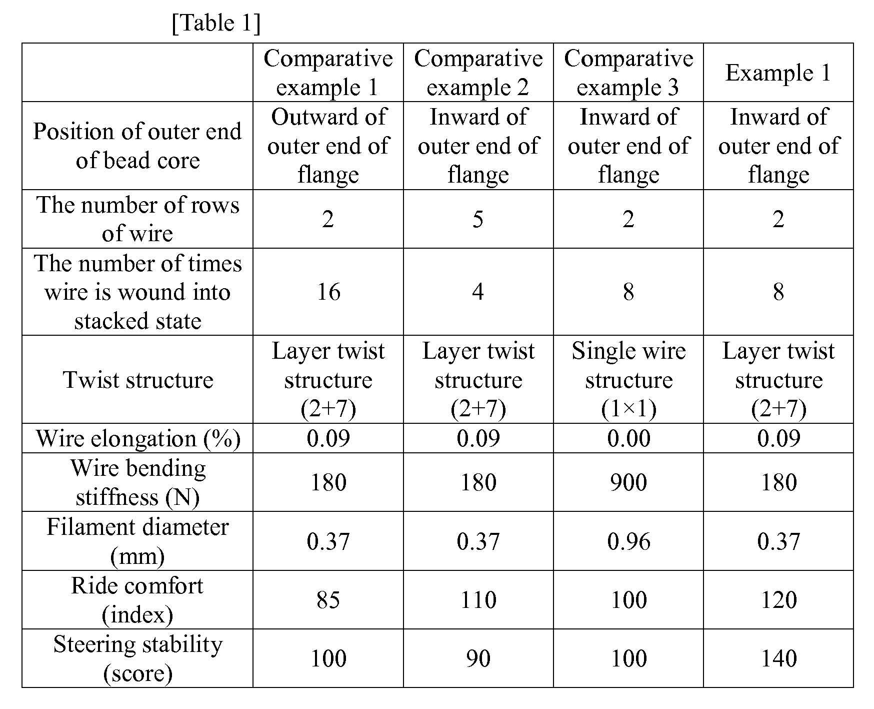

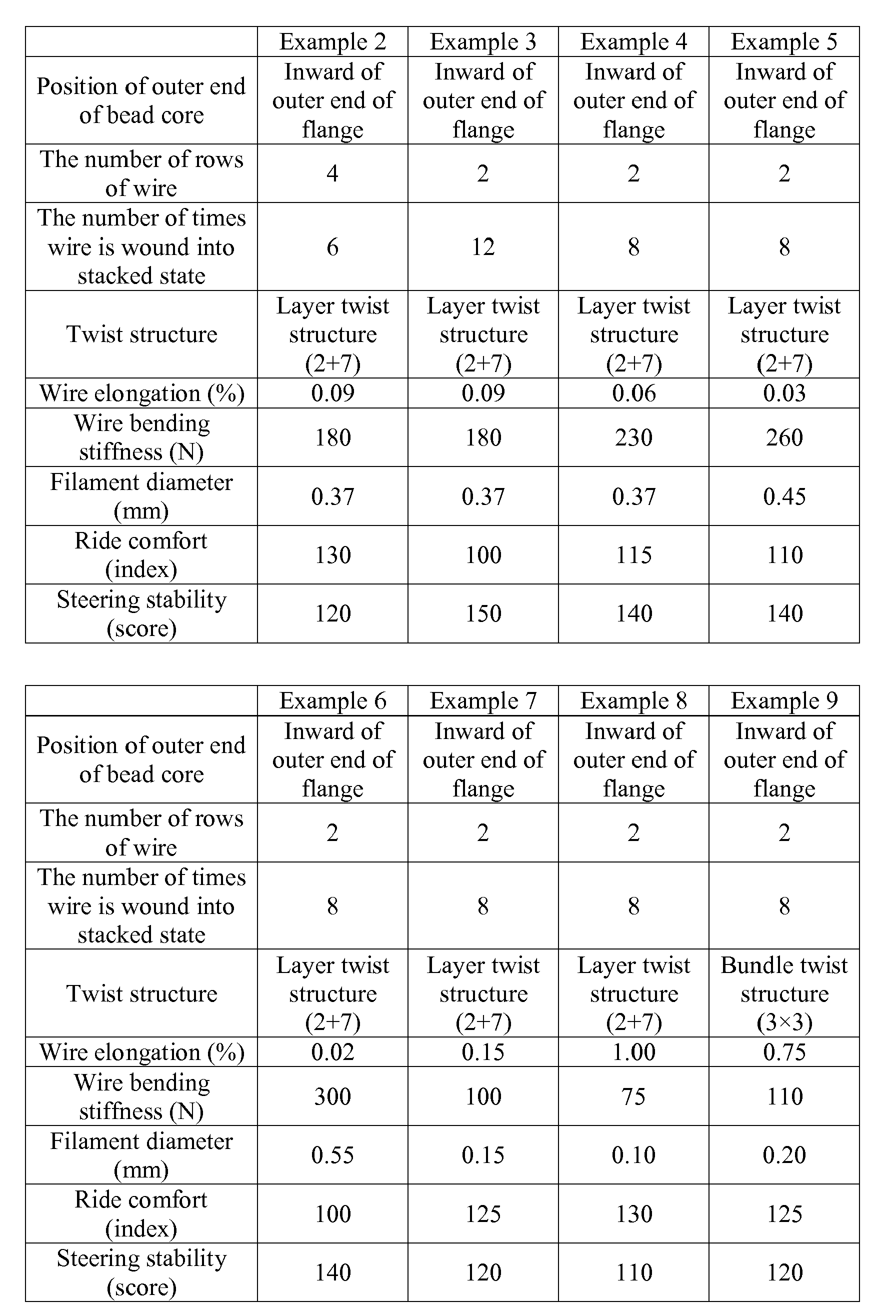

As is apparent from Table 1, it has been confirmed that ride comfort and steering stability are significantly improved in a well-balanced manner in the pneumatic tires of examples as compared to the tires of comparative examples.

## Claims

1. A pneumatic tire (1) comprising:
a carcass (6) that extends from a tread portion (2) through sidewall portions (3) to bead portions (4); and
annular bead cores (5) disposed in the bead portions (4), and
the carcass (6) being turned up along inner circumferential portions of the bead cores (5), wherein
each bead core (5) includes a wire (50) that is wound in a tire circumferential direction,
in a normal state where the pneumatic tire (1) is mounted on a normal rim (RM), and is inflated to a normal internal pressure, and no load is applied thereto, an outer end (5o), in a tire radial direction, of the bead core (5) is positioned tire-radially inward of an outer end (Fo), in the tire radial direction, of a flange (F) of the normal rim (RM),
the wire (50) is arranged in two or more rows in a tire axial direction, and is wound plural times in the tire radial direction into a stacked state,
the number of times the wire (50) is wound in the tire radial direction into the stacked state is greater than or equal to 1.5 times the number of the rows of the wire (50) in the tire axial direction,
**characterized in that**
the wire (50) is structured so as to have a plurality of filaments (51, 53, 55) twisted,
the wire (50) has a bundle twist structure in which the plurality of the filaments (53) are bundled and twisted, and
the wire (50) has an elongation of 0.03% to 0.75% when a tensile force is increased from 2.5 N to 49 N.

2. The pneumatic tire (1) according to claim 1, wherein the wire (50) has a bending stiffness of 100 N to 260 N.

3. The pneumatic tire (1) according to claim 1 or 2, wherein each filament (51, 53, 55) has a diameter of 0.15 mm to 0.45 mm.

## Patentansprüche

1. Luftreifen (1), umfassend:
eine Karkasse (6), die sich von einem Laufflächenabschnitt (2) über Seitenwandabschnitte (3) bis zu Wulstabschnitten (4) erstreckt; und
ringförmige Wulstkerne (5), die in den Wulstabschnitten (4) angeordnet sind, und
wobei die Karkasse (6) entlang innerer Umfangsabschnitte der Wulstkerne (5) umgeschlagen ist, wobei
jeder Wulstkern (5) einen Draht (50) aufweist, der in der Umfangsrichtung des Reifens gewunden ist,
in einem Normalzustand, in welchem der Luftreifen (1) an einer Normalfelge (RM) montiert und bis zu einem normalen Innendruck aufgepumpt ist und keine Kraft auf diesen ausgeübt wird, ein äußeres Ende (5o) in einer Reifenradialrichtung des Wulstkerns (5) reifenradial innerhalb eines äußeren Endes (Fo) in der Reifenradialrichtung eines Flansches (F) der Normalfelge (RM) positioniert ist,
der Draht (50) in zwei oder mehr Reihen in einer Reifenaxialrichtung angeordnet ist und mehrere Male in der Reifenradialrichtung in einen gestapelten Zustand gewunden ist,
die Häufigkeit, mit welcher der Draht (50) in der Reifenradialrichtung in den gestapelten Zustand gewunden ist, größer als das 1,5-fache oder gleich dem 1,5-fachen der Anzahl der Reihen des Drahts (50) in der Reifenaxialrichtung ist,
**dadurch gekennzeichnet, dass**
der Draht (50) derart strukturiert ist, dass er mehrere verdrehte Filamente (51, 53, 55) aufweist,
der Draht (50) eine Bündelverdrehstruktur aufweist, in welcher die mehreren Filamente (53) gebündelt und verdreht sind, und
der Draht (50) eine Elongation von 0,03% bis 0,75% aufweist, wenn eine Zugkraft von 2,5 N auf 49 N erhöht wird.

2. Luftreifen (1) nach Anspruch 1, wobei der Draht (50) eine Biegesteifigkeit von 100 N bis 260 N aufweist.

3. Luftreifen (1) nach Anspruch 1 oder 2, wobei jedes Filament (51, 53, 55) einen Durchmesser von 0,15 mm bis 0,45 mm aufweist.

## Revendications

1. Bandage pneumatique (1) comprenant :
une carcasse (6) qui s'étend depuis une portion formant bande de roulement (2) à travers des portions formant parois latérales (3) jusqu'à des portions formant talons (4) ; et
des âmes de talon annulaires (5) disposées dans les portions formant talons (4), et
la carcasse (6) étant retournée le long des portions circonférentielles intérieures des âmes de talon (5), dans lequel
chaque âme de talon (5) comprend un fil (50) qui est enroulé dans la direction circonférentielle du pneumatique,
dans un état normal dans lequel le bandage pneumatique (1) est monté sur une jante normale (RM) et est gonflé à une pression interne normale, et aucune charge n'est appliquée sur celui-ci, une extrémité extérieure (5o), dans la direction radiale du pneumatique, de l'âme de talon (5) est positionnée radialement à l'intérieur d'une extrémité extérieure (Fo) d'une bride (F) de la jante normale (RM), dans la direction radiale du pneumatique,
le fil (50) est agencé en deux ou plusieurs rangées dans la direction axiale du pneumatique, et est enroulé plusieurs fois dans la direction radiale du pneumatique pour former un état empilé,
le nombre de fois que le fil (50) est enroulé dans la direction radiale du pneumatique à l'état empilé est supérieur ou égal à 1,5 fois le nombre de rangées du fil (50) dans la direction axiale du pneumatique,
**caractérisé en ce que**
le fil (50) est structuré de manière à avoir une pluralité de filaments (51, 53, 55) torsadés,
le fil (50) a une structure torsadée en faisceau dans laquelle la pluralité des filaments (53) sont mis en faisceau et torsadés, et
le fil (50) a un allongement de 0,03% à 0,75% lorsqu'une force de traction est augmentée de 2,5 N à 49 N.

2. Bandage pneumatique (1) selon la revendication 1, dans lequel le fil (50) a une rigidité en flexion de 100 N à 260 N.

3. Bandage pneumatique (1) selon la revendication 1 ou 2, dans lequel chaque filament (51, 53, 55) a un diamètre de 0,15 mm à 0,45 mm.
